Europäisches Patentamt

European Patent Office

Office européen des brevets

(11) Publication number: **0 049 844**
**B1**

(12) **EUROPEAN PATENT SPECIFICATION**

(45) Date of publication of patent specification: **23.01.85**

(51) Int. Cl.⁴: **F 16 F 9/34**

(21) Application number: **81107943.3**

(22) Date of filing: **05.10.81**

(54) Shock absorber with vortex flow guide.

(30) Priority: **14.10.80 JP 145181/80 U**
**22.10.80 JP 150798/80 U**

(43) Date of publication of application:
**21.04.82 Bulletin 82/16**

(45) Publication of the grant of the patent:
**23.01.85 Bulletin 85/04**

(84) Designated Contracting States:
**DE FR GB**

(56) References cited:
**DE-A-2 604 467**
**DE-A-3 007 410**
**DE-A-3 039 801**
**GB-A-1 068 179**
**US-A-3 672 474**
**US-A-4 082 169**

(73) Proprietor: **NISSAN MOTOR COMPANY,**
**LIMITED**
**No.2, Takara-cho, Kanagawa-ku**
**Yokohama-shi Kanagawa-ken 221 (JP)**

(72) Inventor: **Iwata, Kazuroh**
**1136-331, Imaizumi**
**Kamakura-shi Kanagawa-ken (JP)**
Inventor: **Fukushima, Naoto**
**1-7-505, Nishikaigan 3-chome Tsujido**
**Fujisawa-shi Kanagawa-ken (JP)**
Inventor: **Hidaka, Kunihiko**
**47-13, Sugita 8-chome Isogo-ku**
**Yokohama-shi Kanagawa-ken (JP)**

(74) Representative: **Patentanwälte TER MEER -**
**MÜLLER - STEINMEISTER**
**Triftstrasse 4**
**D-8000 München 22 (DE)**

Courier Press, Leamington Spa, England.

## Description

The present invention relates generally to a vortex flow shock absorber which produces an absorbing force against a shock applied thereto by creating a vortex flow of a working fluid in a vortex chamber. More specifically, the invention relates to a shock absorber with a guide means for guiding the working fluid in vortex fashion.

The vortex flow shock absorbers have been known and applied to vehicle suspensions, for example. In comparison with the other types of shock absorber, the vortex flow shock absorber has relatively compact size. This is considered as advantageous for requiring relatively small space for mounting onto the vehicle.

In such a vortex flow shock absorber, the shock absorbing force produced by the vortex flow of the working fluid depends on the diameter of the vortex chamber. Therefore, it is necessary to provide a sufficiently large diameter of the vortex chamber in a piston reciprocally disposed in the shock absorber and/or in a bottom fitting for obtaining sufficient shock absorbing force. On the other hand, the vortex chamber either in the piston or in the bottom fitting is to be communicated with a fluid chamber via a vortex passage. Conventionally, the vortex passage works for producing vortex flow of the working fluid by tangentially discharging the fluid into the vortex chamber. To this purpose, the end of the vortex passage is necessarily open tangentially with respect to the circle of the vortex chamber. This requires a certain lateral space with respect to the longitudinal axis of the shock absorber for defining the vortex passage. This, in turn, prevents expanding of the diameter of the vortex chamber.

Therefore, it is essential for compacting the size of the shock absorber with enough shock absorbing force to reduce the lateral dimension for providing the vortex passage. It will be appreciated that the maximum diameter of the vortex chamber can be obtained if the thickness of the wall defining the vortex chamber can be minimized. For enabling the wall to have a minimized thickness, the lateral dimension of the vortex passage must be also minimized. This can be achieved by providing a substantially vertical vortex passage.

In the DE—A—3 007 410, a shock absorber is disclosed, wherein guide means are arranged within the vortex chamber to guide the working fluid flowing in a vortex pattern inside this chamber. The guide means are formed by ribs which in plan view are arranged in concentric circles and are interrupted by radial passages. Due to this arrangement, the ribs are not operative to induce a vortex flow pattern of the working fluid but are only operative to guide the fluid once a tangential direction of movement has been imposed thereon. The tangential movement of the working fluid is induced in the conventional manner by tangentially introducing the fluid into the vortex chamber through passages formed in the circumferential wall of the piston. Thus, the circumferential wall must have a considerable thickness, which results in a reduction of the diameter of the vortex chamber.

Therefore, it is an object of the present invention to provide a vortex flow shock absorber which has a maximum diameter of the vortex chamber.

Another and more specific object of the present invention is to provide a vortex flow shock absorber which has fluid flow guide means for producing the vortex flow of the working fluid without providing vortex passages in the circumferential wall of the vortex chamber.

To accomplish the above-mentioned and other objects, the shock absorber according to the present invention has a vortex chamber communicating with a fluid chamber defined in an absorber cylinder via straight vortex passages which substantially extend parallel to the axis of the piston. The fluid flow guide means is provided in the vortex chamber adjacent the inner end of the vortex passage. This guide means is adapted to produce the fluid flow in the vortex chamber in vortex fashion.

Accordingly, the lateral dimension for providing the vortex passage tangentially opening to the vortex chamber is no more required. This serves for maximizing the vortex chamber diameter and, thus, for compacting the size of the piston with compatible shock absorbing force.

According to one aspect of the present invention, there is provided a vortex flow shock absorber having a hollow cylinder defining therein a fluid chamber filled with a working fluid, a reciprocating piston movably disposed within said fluid chamber to divide the latter into an upper first chamber and a lower second chamber, said piston being formed with a vortex chamber for flowing the working fluid introduced thereinto in vortex pattern, and means for establishing communication between said vortex chamber and said first and second chambers, said means including means for defining first and second fluid passages respectively adapted to establish fluid communication between said first chamber and said vortex chamber and between said vortex chamber and said second chamber, the first passage extending essentially parallel to the axis of said piston, said piston further comprising means disposed within said vortex chamber and opposing to the inner end of said first passage for guiding the working fluid flowing into said vortex chamber via said first passage so that said working fluid flows in said vortex chamber in vortex pattern.

The present invention will be more fully understood from the herebelow given detailed description of the invention and from the accompanying drawings of preferred embodiment of the invention, which, however, should not be taken as limitative to the invention but for elucidation and explanation only.

In the drawings:

Fig. 1 is a longitudinal section of a first embodiment of a direct-acting shock absorber according to the present invention;

Fig. 2 is an enlarged transverse section of a piston applied to the shock absorber of Fig. 1;

Fig. 3 is exploded perspective view of the piston of Fig. 2;

Fig. 4 is a front elevation of an upper member of the piston of Fig. 2;

Fig. 5 is a botton view of the upper member of Fig. 4;

Fig. 6 is a further enlarged perspective view showing the detail of a vortex generating means provided to the upper member;

Fig. 7 is a plan view of a lower member of the piston of Fig. 2;

Fig. 8 is a transverse section taken along line 8—8 of Fig. 7;

Fig. 9 is an enlarged transverse section of a bottom fitting in the shock absorber of Fig. 1;

Fig. 10 is a front elevation of an upper member of the bottom fitting of Fig. 9;

Fig. 11 is a bottom view of the upper member of Fig. 10;

Fig. 12 is a plane view of a lower member of the bottom fitting of Fig. 9;

Fig. 13 is a section of the lower member taken along line 13—13 of Fig. 12;

Fig. 14 is a longitudinal section of a second embodiment of the shock absorber according to the present invention;

Fig. 15 is an enlarged exploded perspective view of a piston in the shock absorber of Fig. 14;

Fig. 16 is an enlarged transverse section of the piston in the shock absorber of Fig. 14;

Fig. 17 is a section of the piston taken along line 17—17 of Fig. 16;

Fig. 18 is a perspective view of a guide member in the piston of Fig. 15;

Fig. 19 is an enlarged transverse section of a bottom fitting in the shock absorber of Fig. 14;

Fig. 20 is a section of the bottom fitting of Fig. 19.

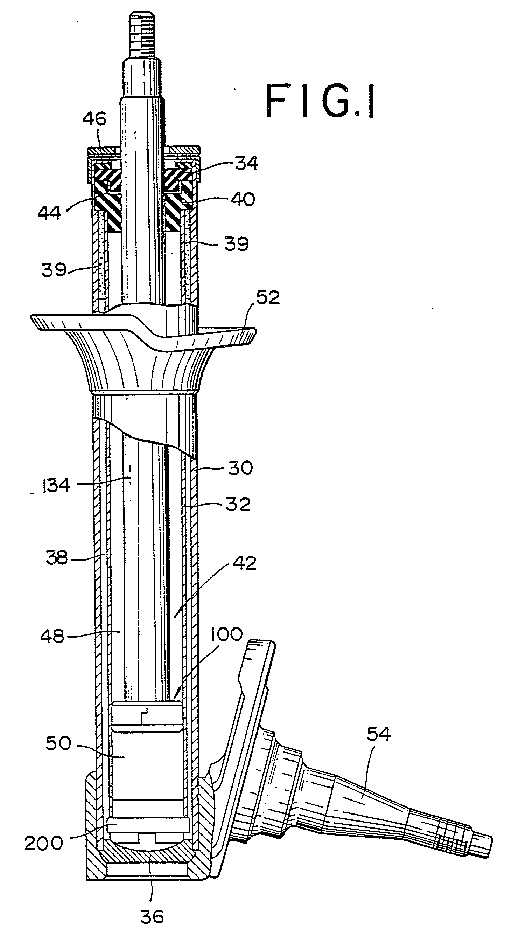

Referring now to the drawings, particularly to Fig. 1, there is illustrated a first embodiment of a direct-acting shock absorber according to the present invention. The shock absorber includes outer and inner cylinders 30 and 32 coaxially arranged with respect to each other. The outer cylinder 30 is closed at both upper and lower ends with an elastic sealer 34 and an end fitting 36. The inner cylinder 32 is disposed within the outer cylinder 30 in spaced apart relationship to define therebetween a fluid reservoir chamber 38. A bottom fitting 200 is attached at the lower end of the inner cylinder 32. The upper end of the inner cylinder 32 is closed with an elastic sealer 40 to define a fluid chamber 42 in the inner cylinder, in which a working fluid is contained. The sealer 40 has a recess 44 on the upper surface, which recess receives a projecting portion downwardly protruding on the lower surface of the sealer 34. Also, the sealer 34 secures a sealing ring 46 between the inner surface of the upper end of the outer cylinder 30.

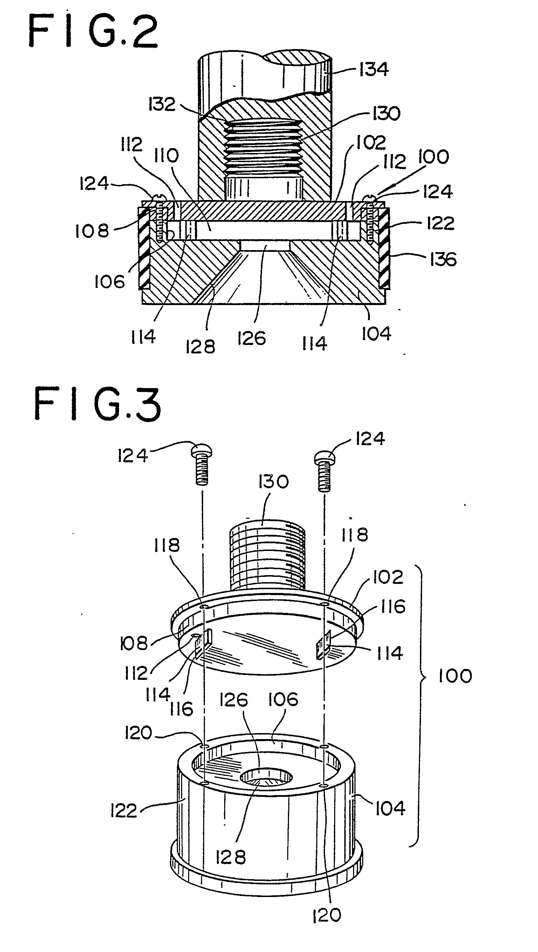

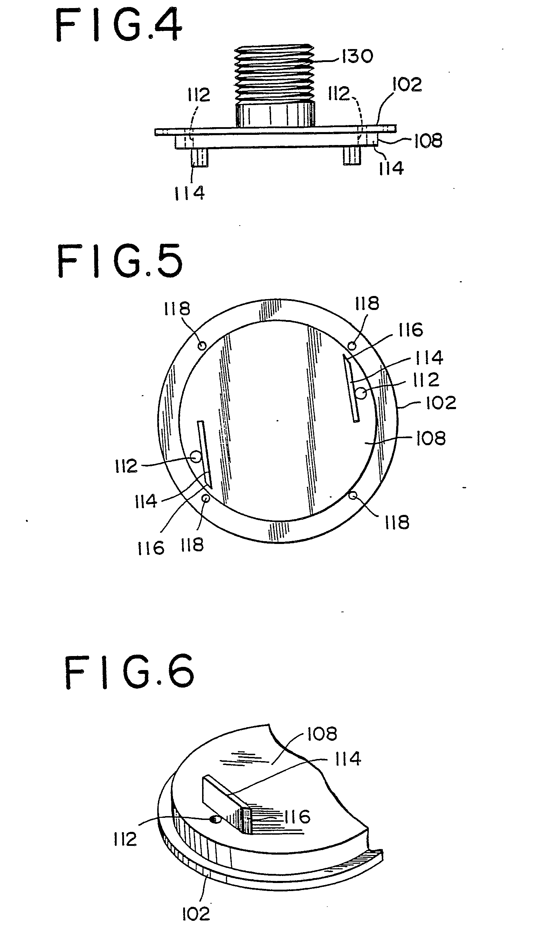

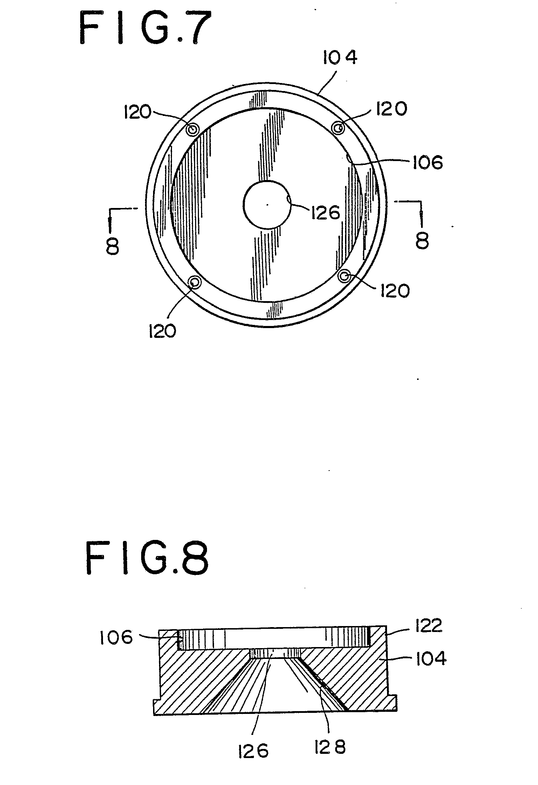

As shown in Figs. 2 to 8, a piston 100 is reciprocally disposed within the fluid chamber 42 to divide the same into upper and lower chambers 48 and 50. The piston 100 comprises a substantially disc-shaped upper member 102 and a substantially cup-shaped lower member 104. The lower member 104 is formed with a circular recess 106 on the upper surface thereof. The upper member 102 has a stepped lower section 108 on the lower surface thereof. The stepped lower section 108 is adapted to engage with the circular recess 106 of the lower member to define a vortex chamber 110 therebetween.

The upper member 102 is formed with a pair of through openings 112 which extend vertically through the lower section 108. The through openings 112 are arranged in diametrical alignment and symmetrical with respect to the vertical axis of the piston. Adjacent the innermost edge of the through openings 112, blade-shaped guide members 114 are provided. The blade-shaped guide members 114 are respectively attached onto the lower surface of the lower section 108 of the upper member 102 and are respectively adapted to guide the fluid flowing into the vortex chamber 110 via the through openings 112 in tangential direction. Each of the guide members 114 has a tapered end 116 which faces to the inner periphery of the vortex chamber 110. The upper member 102 is further formed with a plurality of through openings 118 adjacent the outer circumference thereof. The through openings 118 extend vertically through the upper member 102 and open at the lower ends thereof outside of the stepped lower section 108.

The lower member 104 is formed with a plurality of threaded bores 120. The bores 120 vertically extend through the vertical periphery 122 of the lower member 104, which defines the vortex chamber 110. Each of the bores 120 is vertically aligned with the through opening 118 of the upper member 102. A screw 124 extends through the through opening 118 and engages with the thread in the bore 120 to fixedly attach the upper and lower members 102 and 104. The lower member 104 is also formed with a central through opening 126 which has a tapered lower section 128.

Thus, the vortex chamber 110 communicates with the upper chamber 48 via the through openings 112, and with the lower chamber 50 via the through opening 126.

A threaded projection 130 is provided on the upper surface of the upper member 102 and axially extends along the vertical axis of the piston 100. The threaded projection 130 engages with a threaded bore 132 formed with a piston rod 134. The piston rod 134 connects the piston 100 to a member, so as to absorb a shock applied to this member, which member is assumed to be vehicle body, for example.

In Fig. 2, the reference numeral 136 denotes a sealing member attached onto the circumferential periphery of the piston 100 for establishing liquid-proofing between the upper and lower chambers 102 and 104.

As shown in Fig. 1, a bottom fitting 200 is attached to the lower end of the inner cylinder 32 for separating the lower chamber 50 and the fluid reservoir chamber 38.

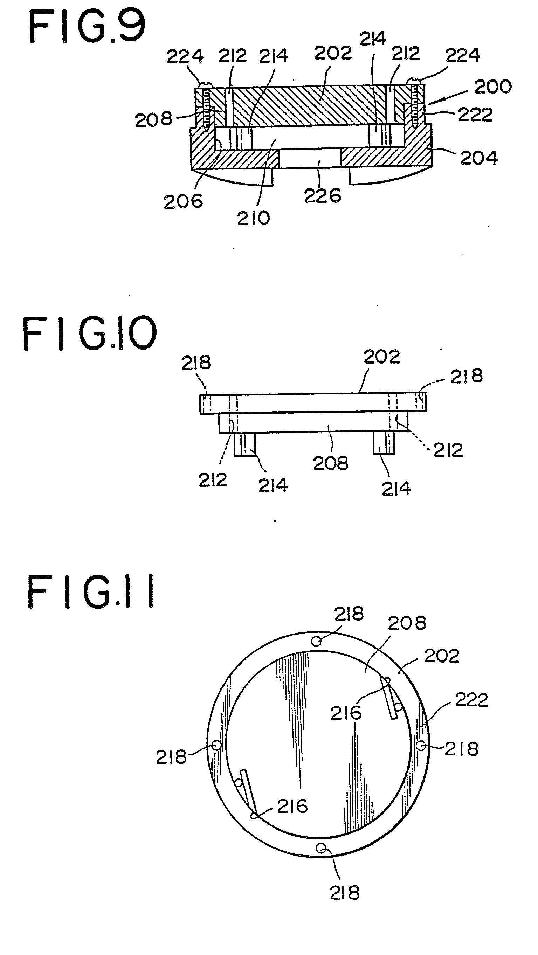

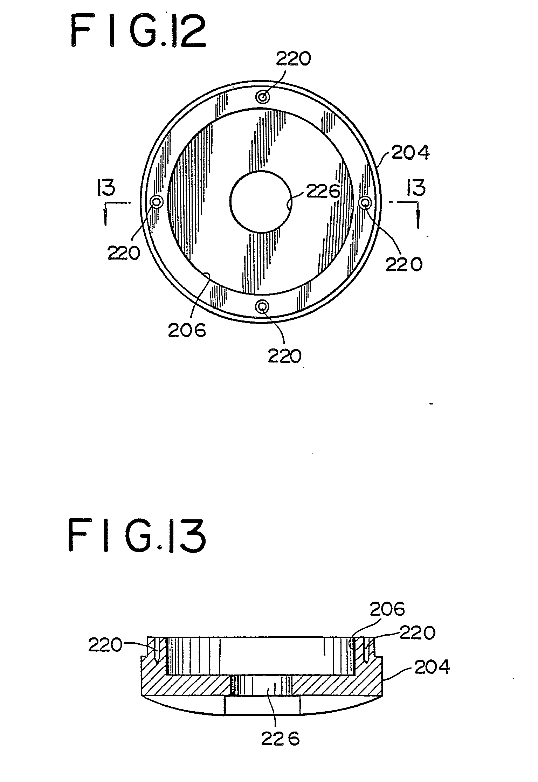

As shown in Figs. 9 to 13, the bottom fitting 200 comprises a substantially disc-shaped upper member 202 and a substantially cup-shaped lower member 204. The lower member 204 is formed with a circular recess 206 on the upper surface thereof. The upper member 202 has a stepped lower section 208 on the lower surface thereof. The stepped lower section 208 is adapted to engage with the circular recess 206 of the lower member to define a vortex chamber 210 therebetween.

The upper member 202 is formed with a pair of through openings 212 which extend vertically through the lower section 208. The through openings 212 are arranged in diametrical alignment and symmetrical with respect to the vertical axis of the piston. Adjacent the innermost edge of the through openings 212, blade-shaped guide members 214 are provided. The blade-shaped guide members 214 are respectively attached onto the lower surface of the lower section 208 of the upper member 202 and are respectively adapted to guide the fluid flowing into the vortex chamber 210 via the through openings 212 in tangential direction. Each of the guide members 214 has a tapered end 216 which faces to the inner periphery of the vortex chamber 110. The upper member 202 is further formed with a plurality of through openings 218 adjacent the outer circumference thereof. The through openings 218 extend vertically through the upper member 202 and open at the lower ends thereof, outside the stepped lower section 208.

The lower member 204 is formed with a plurality of threaded bores 220. The bores 220 vertically extend through the vertical periphery 222 of the lower member 204, which defines the vortex chamber 210. Each of the bores 220 is vertically aligned with the through opening 218 of the upper member 202. A screw 224 extends through the through opening 218 and engages with the thread in the bore 220 to fixedly attach the upper and lower members 202 and 204. The lower member 204 is also formed with a central through opening 226.

Thus, the vortex chamber 210 communicates with the lower chamber 50 via the through opening 212, and with the fluid reservoir chamber 38 via the through opening 226.

In the compression stroke, the piston 100 moves downwardly to expand the volume of the upper fluid chamber 48 with reduction of the fluid pressure therein and to compress the volume of the lower fluid chamber 50 with increase of the fluid pressure. Due to the fluid pressure difference between the upper and lower fluid chambers 48 and 50, a fluid flow is produced in the direction from the lower fluid chamber 50 to the upper fluid chamber 48. The fluid flows into the vortex chamber 110 via the through opening 126 of the lower member 104. The fluid in the vortex chamber 126 flows through the through opening 112 to the upper fluid chamber 48.

On the other hand, due to increase of the fluid pressure, the fluid in the lower fluid chamber 50 flows into the vortex chamber 210 via the through openings 212. During flow from the lower chamber 48 to the vortex chamber 210 of the bottom fitting 200, the guide members 214 guide the fluid to flow in the tangential direction with respect to the circle of the vortex chamber. Therefore, a vortex is produced in the vortex chamber 210 to limit the flow amount of the fluid. The fluid in the vortex chamber 210 flows into the fluid reservoir chamber 38. By increasing of the fluid amount, a gas contained in the upper section 39 of the fluid reservoir chamber is reduced in volume, according to the increase of the pressure thereof.

In the expansion stroke, the piston 100 moves upwardly to expand the volume of the lower fluid chamber 50, thus reducing the fluid pressure therein, and to reduce the volume of the upper fluid chamber 48, thereby increasing the fluid pressure. Due to the fluid pressure difference between the upper and lower fluid chambers 48 and 50, a fluid flow is produced in the direction from the upper fluid chamber 48 to the lower fluid chamber 50. The fluid flows into the vortex chamber 110 via the through opening 112. The fluid in the vortex chamber 110 flows through the through opening 126 to the lower fluid chamber 50. During flow in the vortex chamber 110, the fluid is guided to flow in the tangential direction by the guide member 114. Thus, a vortex is produced in the vortex chamber 110.

On the other hand, due to the reduction of the fluid pressure, the fluid in the fluid reservoir chamber 38 flows into the vortex chamber 210 via the through opening 226. The fluid in the vortex chamber 210 flows into the lower fluid chamber 50.

During the fluid flow as set forth, the through openings 112 and 212 serve as orifices to limit the fluid flow therethrough to produce a resistance against the fluid flow. On the other hand, the vortex in the vortex chambers 110 and 210 also produces resistance against the fluid flowing through the vortex chamber. If the piston stroke is so small or the piston speed is so low that it cannot generate a sufficient resistance against the fluid flowing through the vortex chamber 110 or 210, the resistance provided by the orifice effect of the through openings 112 or 212 works as main factor of an absorbing force against the shock applied to the shock absorber. When the piston stroke becomes large enough or the piston speed is increased sufficiently, the vortex in the vortex chamber 110 or 210 provides a sufficient resistance against the fluid flowing through the vortex chamber.

As stated, the absorbing force produced in the vortex chamber by the vortex is proportional to the diameter of the vortex chamber. According to the shown embodiment of the present invention, since the vortex passages are formed at the circumference of the valve member disposed in the groove of the piston, the diameter of the vortex chamber can be of maximum in spite of the presence of the vortex passages. This, in turn, allows the piston being reduced in diameter to permit the shock absorber to be reduced in size.

In Fig. 1, the reference numerals 52 and 54 respectively represent a spring seat and a steering knuckle.

However, the shown embodiment illustrates these elements for the purpose of showing the specific construction of the shock absorber, it should be appreciated that these are not always necessary to be provided to the shock absorber of the present invention.

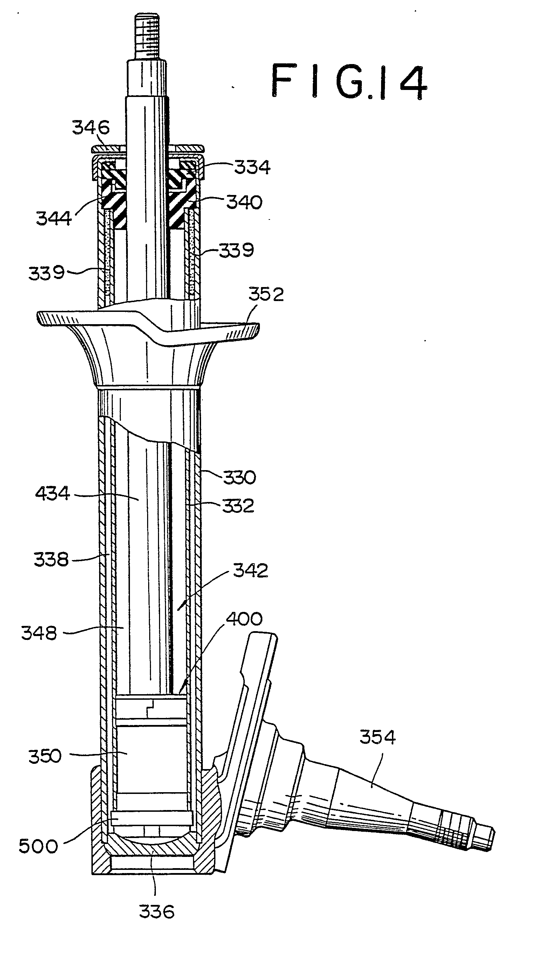

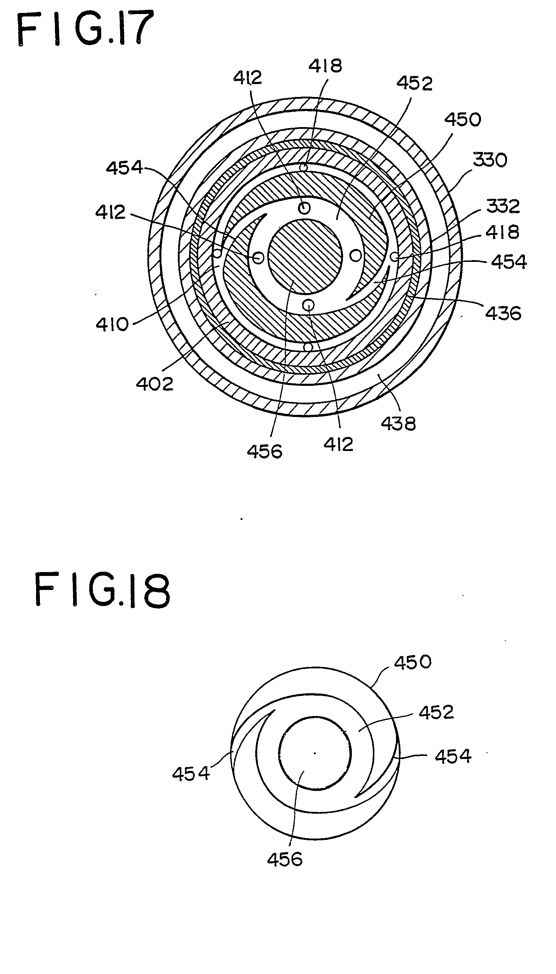

Fig. 14 to 20 show a second embodiment of a direct-acting shock absorber according to the present invention.

Likewise to the foregoing first embodiment, the shock absorber includes outer and inner cylinders 330 and 332 coaxially arranged with respect to each other. The outer cylinder 330 is closed at both upper and lower ends with an elastic sealer 334 and an end fitting 336. The inner cylinder 332 is disposed within the outer cylinder 330 in spaced apart relationship to define therebetween a fluid reservoir chamber 338. A bottom fitting 500 is attached to the lower end of the inner cylinder 332. The upper end of the inner cylinder 332 is closed with an elastic sealer 340 to define a fluid chamber 342 in the inner cylinder, which contains a working fluid. The sealer 340 has a recess 344 on the upper surface, which recess receives a projecting portion downwardly protruding on the lower surface of the sealer 334. Also, the sealer 334 secures a sealing ring 346 between the inner surface of the upper end of the outer cylinder 330.

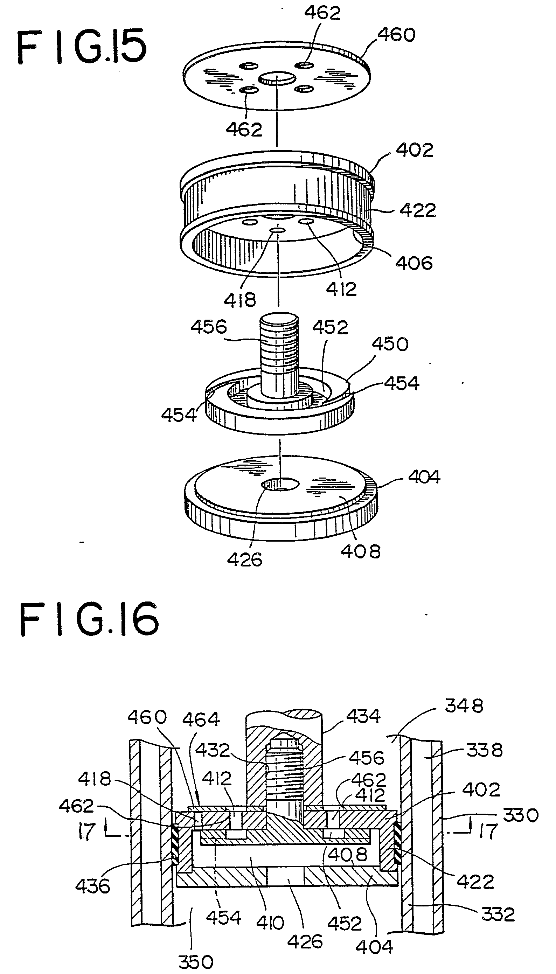

As shown in Figs. 15 to 18, the piston 400 is reciprocally disposed within the fluid chamber 342 to divide the same into upper and lower chambers 348 and 350. The piston 400 comprises an upper member 402 and a lower member 404. The upper member 402 is formed with a circular recess 406 on the lower surface thereof. The lower member 404 has a stepped upper section 408 on the upper surface thereof. The stepped lower section 408 is adapted to engage with the circular recess 406 of the upper member 402 to define a vortex chamber 410 therebetween.

The upper member 402 is formed with through openings 412 which extend vertically. The upper member 402 is further formed with a plurality of through openings 418 adjacent the outer circumference thereof. The through openings 418 extend vertically through the horizontal section of the upper member 102 and open to the vortex chamber 410. The lower member 404 is also formed with a central through opening 426.

Thus, the vortex chamber 410 communicates with the upper chamber 348 via the through openings 412, and with the lower chamber 350 via the through opening 426.

A vortex flow guide 450 is disposed within the vortex chamber 410. The vortex flow guide 450 is formed with an annular central groove 452 and a pair of helical grooves 454 extending outwardly from the annular central groove 452. The outer end of the helical groove 454 is directed tangentially with respect to the circle of the vortex chamber. The annular central groove 452 is adpated to face with the inner end of the through openings 412.

The vortex flow guide 450 is further provided with a threaded projection 456 extending upwardly from the upper surface thereof. The threaded projection 456 engages with a threaded bore 432 of a piston rod 434. Therefore, the upper surface of the vortex flow guide 450 is fixedly attached to the lower surface of the horizontal section of the upper member 402.

Between the lower end of the piston rod and the upper surface of the horizontal section of the upper member 402, a resilient thin disc 460 is interposed. The disc 460 is formed with through openings 462 at locations respectively corresponding to the upper ends of the through openings 412. The resilient thin disc 460 is adapted to close the upper ends of the through openings 418 to constitute there with a one-way relief valve 464.

As shown in Fig. 16, the through openings 412 have respective sectional areas adapted to resist against the fluid flow.

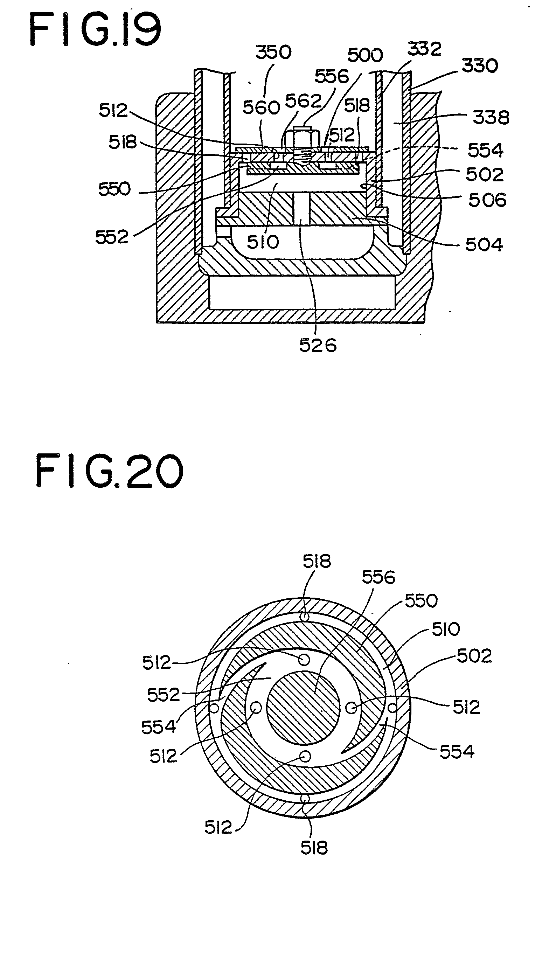

As shown in Figs. 19 to 20, the bottom fitting 500 comprises an upper member 502 and a lower member 504. The upper member 502 is formed with a circular recess 506 on the lower surface thereof. The lower member 504 has a stepped upper section 508 on the upper surface thereof. The stepped lower section 508 is adapted to engage with the circular recess 506 of the upper member 502 to define a vortex chamber 510 therebetween.

The upper member 502 is formed with through openings 512 which extend vertically. The upper member 502 is further formed with a plurality of through openings 518 adjacent the outer circumference thereof. The through openings 518 extend vertically through the horizontal section of the upper member 502 and open to the vortex chamber 510. The lower member 504 is also formed with a central through opening 526.

Thus, the vortex chamber 510 communicates with the upper chamber 48 via the through openings 512, and with the lower chamber 40 via the through opening 526.

A vortex flow guide 550 is disposed within the vortex chamber 510. The vortex flow guide 550 is formed with an annular central groove 552 and a pair of helical grooves 554 extending outwardly from the annular central groove 552. The outer end of the helical groove 554 is directed tangentially with respect to the circle of the vortex chamber. The annular central groove 552 is adapted to face with the inner end of the through openings 512.

The vortex flow guide 550 is further provided with a threaded projection 556 extending upwardly from the upper surface thereof. The threaded projection 556 engages with a nut 532. Therefore, the upper surface of the vortex flow guide 550 is fixedly attached to the lower surface of the horizontal section of the upper member 502.

Between the lower end of the nut 532 and the upper surface of the horizontal section of the upper member 502, a resilient thin disc 560 is interposed. The disc 560 is formed with through openings 562 at locations respectively corresponding to the upper ends of the through openings 512. The resilient thin disc 560 is adapted to close the upper ends of the through openings 518 to constitute therewith a one-way relief valve 564.

In the compression stroke, the piston 400 moves downwardly to expand the volume of the upper fluid chamber 348, thereby reducing the fluid pressure therein and to compress the volume of the lower fluid chamber 350, thus increasing the fluid pressure. Due to the fluid pressure difference between the upper and lower fluid chambers 348 and 350, a fluid flow is produced in the direction from the lower fluid chamber 350 to the upper fluid chamber 348. The fluid flows into the vortex chamber 410 via the through opening 426 of the lower member 404. The fluid in the vortex chamber 426 flows through the through openings 412 to the upper fluid chamber 348.

On the other hand, due to the increase of the fluid pressure, the fluid in the lower fluid chamber 350 flows into the vortex chamber 510 via the through openings 412. During flow from the lower chamber 348 to the vortex chamber 510 of the bottom fitting 500, the vortex flow guides 554 guide the fluid to flow in tangential direction with respect to the circle of the vortex chamber 510. Therefore, a vortex is produced in the vortex chamber 510 to limit the flow amount of the fluid. The fluid in the vortex chamber 510 flows into the fluid reservoir chamber 338. By increasing of the fluid amount, a gas filled in the upper section 339 of the fluid reservoir chamber is reduced in volume, according to the pressure thereof.

In the expansion stroke, the piston 400 moves upwardly to expand the volume of the lower fluid chamber 350 with reduction of the fluid pressure therein and to reduce the volume of the upper fluid chamber 348 with increase the fluid pressure. Due to the fluid pressure difference between the upper and lower fluid chambers 348 and 350, the fluid flow is produced in the direction from the upper fluid chamber 348 to the lower fluid chamber 350. The fluid flows into the vortex chamber 410 via the through opening 412. The fluid in the vortex chamber 410 flows through the annular central groove 452 and the helical grooves 454 to produce a vortex therein and then flows out via the through opening 426 to the lower fluid chamber 350.

On the other hand, due to reduction of the fluid pressure in the lower chamber 348, the fluid in the fluid reservoir chamber 338 flows into the vortex chamber 510 via the through opening 526. The fluid in the vortex chamber 510 flows into the lower fluid chamber 350 via the through opening 512.

During the fluid flow as set forth, the vortex passages 412 and 512 serve as orifices to limit the fluid flow therethrough to produce a resistance against the fluid flow. On the other hand, the vortex in the vortex chambers 410 and 510 also produces a resistance against the fluid flowing through the vortex chamber. If the piston stroke is so small or the piston speed is so low that it cannot generate a sufficient resistance against the fluid flowing through the vortex chambers 410 and 510, the resistance provided by the orifice effect of the vortex passages 412 and 512 works as main factor of an absorbing force against the shock applied to the shock absorber. When the piston stroke becomes large enough or the piston speed is increased to sufficiently high, the vortex in the vortex chamber 228 provides a sufficient resistance against the fluid flowing through the vortex chamber.

During piston stroke, fluid pressures in respective vortex chambers 410 and 510 are increased according to increasing of the fluid pressures in respectively corresponding higher pressure chambers. In a piston expansion stroke, the fluid pressure in the lower fluid chamber 350 is increased by reducing the volume thereof to create pressure difference between the lower fluid chamber and the upper fluid and fluid reservoir chambers. In this result, the fluid in the lower fluid chamber flows to the upper fluid chamber and the fluid reservoir chamber via the vortex chambers of the piston and the bottom fitting. By this, the fluid pressure in the vortex chamber 410 of the piston is increased. When the pressure difference between the vortex chamber 410 and the upper fluid chamber 438 exceeds the set pressure of the closure disc 460, the closure disc 460 is resiliently moved to release from the end of the opening 418 to allow the fluid in the vortex chamber 410 of the piston to flow toward the upper fluid chamber therethrough. At the same time, the closure disc 560 maintains closing contact onto the bottom fitting to block fluid communication from the lower fluid chamber to the vortex chamber 510 via the opening 518. On the other hand, in the piston compression stroke, the fluid pressure in the lower fluid chamber becomes lower than that in the upper fluid chamber and the fluid reservoir chamber. In this result, the fluid in the upper fluid chamber and the fluid reservoir chamber flow into the lower fluid chamber via the vortex chambers 410 and 510. During this fluid flow, the fluid pressure in the vortex chamber 510 becomes greater than the fluid pressure in the lower fluid chamber. When the fluid pressure difference between the vortex chamber 510 and the lower fluid chamber becomes greater than a set pressure of the closure disc 560, the closure disc 560 is resiliently moved to establish fluid communication between the vortex chamber 560 and the lower fluid chamber through the opening 518. Therefore, the closure discs 460 and 560 and the openings 418 and 518 serve as relief valves for preventing the shock absorber from producing excessive absorbing force.

As stated, the absorbing force produced in the vortex chamber by the vortex is proportional to the diameter of the vortex chamber. According to the shown embodiment of the present invention, since the vortex passages are formed at the circumference of the valve member disposed in the groove of the piston, the diameter of the vortex chamber can be of maximum in spite of the presence of the vortex passages. This, in turn, allow the piston being reduced in diameter to permit the shock absorber being reduced in size.

In Fig. 14, the reference numerals 352 and 354 respectively represent a spring seat and a steering knuckle. However, the shown embodiment illustrates these elements for the purpose of showing the specific construction of the shock absorber, it should be appreciated that these are not always necessary to be provided to the shock absorber of the present invention.

**Claims**

1. A vortex flow shock absorber having a hollow cylinder (32, 332) defining therein a fluid chamber (42, 342) filled with a working fluid, a reciprocating piston (100, 400) movably disposed within said fluid chamber (42, 342) to divide the latter into an upper first chamber (48, 348) and a lower second chamber (50, 350), said piston being formed with a vortex chamber (110, 410) in which the working fluid introduced thereinto flows in a vortex pattern, and means for establishing communication between said vortex chamber (110, 410) and said first and second chambers (48, 348; 50, 350), said means including means for defining first and second fluid passages (112, 412; 126, 426) respectively adapted to establish fluid communication between said first chamber (48, 348) and said vortex chamber (110, 410) and between said vortex chamber and said second chamber (150, 350), characterized in that said first passage (112, 412) extends essentially parallel to the axis of said piston (100, 400), and in that said piston further comprises means (114, 45) disposed within said vortex chamber (110, 410) adjacent the inner end of said first passage (112, 412) for guiding the working fluid flowing into said vortex chamber (110, 410) via said first passage (112, 412) so that said working fluid flows in said vortex chamber (110, 410) in vortex pattern.

2. Shock absorber according to claim 1, characterized in that said communication means includes said first passage (112) formed in an upper horizontal section of said piston (100) for establishing communication between said first chamber (48) and said vortex chamber (110), said first fluid passage (112) being located adjacent to the circumference of said vortex chamber (110), and said second fluid passage (126) formed in a lower horizontal section of said piston (100) for establishing communication between said second chamber (50) and said vortex chamber (110), said second passage (126) being located substantially at the center of said vortex chamber (110).

3. Shock absorber according to claim 1, characterized in that said communication means (412, 426, 418) include said first passage (412) formed in an upper horizontal section of said piston (400) for establishing communication between said first chamber (348) and said vortex chamber (410), said first fluid passage (412) being located at an intermediate position between the center and the circumference of said vortex chamber (410), and said second fluid passage (426) formed in a lower horizontal section of said piston (400) for establishing communication between said second chamber (350) and said vortex chamber (410), said second passage (426) being located substantially at the center of said vortex chamber (410).

4. Shock absorber according to claim 2, characterized in that said guide means are blade-shaped members (114) disposed adjacent the inner side edges of the respective first passage (112).

5. Shock absorber according to claim 3, characterized in that said guide means include a member (450) formed with a helical groove (454) for guiding the fluid in said vortex chamber to flow in vortex fashion, said guide member (450) including an annular groove section (452) located to oppose with said first fluid passage (412) and communicated with said helical grooves (454).

6. Shock absorber according to any of the above claims, the shock absorber being of the direct-acting-type and comprising in addition to said inner hollow cylinder (32, 332) defining said fluid chamber (42, 343) an outer hollow cylinder (30, 330) coaxially arranged with said inner cylinder (32, 332), of diameter larger than that of said inner cylinder, thereby defining a fluid reservoir chamber (38, 338) between said inner cylinder and said outer cylinder, and a fitting (200, 500) attached to the lower end of said inner cylinder, the fitting being formed with a second vortex chamber (210, 510), characterized in that said second vortex chamber (210, 510) communicates with said second chamber (50, 350) via straight passages (212, 512) and that at least one guide member (214, 550) is disposed within said second vortex chamber (210, 510) to guide the fluid introduced through said passages (212, 512) to produce a vortex in said second vortex chamber (210, 510).

**Revendications**

1. Amortisseur de choc à écoulement tourbillonnaire ayant un cylindre creux (32, 332) y définissant une chambre de fluide (42, 342) remplie d'un fluide de travail, un piston alternatif (100, 400) disposé mobile dans ladite chambre de fluide (42, 342) pour la diviser en une première chambre supérieure (48, 348) et une seconde chambre inférieure (50, 350), ledit piston ayant une chambre de tourbillons (110, 410) dans laquelle le fluide de travail qui y est introduit s'écoule selon un motif tourbillonnaire et une moyen pour établir la communication entre ladite chambre de tourbillons (110, 410) et lesdites première et second chambres (48, 348; 50, 350), ledit moyen comprenant un moyen pour définir des premier et second passages de fluide (112, 412; 126, 426) respectivement adaptés à établir une communication de fluide entre ladite première chambre (48, 348) et ladite chambre de tourbillons (110, 410) et entre ladite chambre de tourbillons et ladite seconde chambre (150, 350), caractérisé en ce que ledit premier passage (112, 412) s'étend essentiellement parallèlement à l'axe dudit piston (110, 400) et en ce que ledit piston comprend de plus un moyen (114, 450) disposé dan ladite chambre de tourbillons (110, 410) à proximité de l'extrémité interne dudit premier passage (112, 412) pour guider le fluide de travail s'écoulant dans ladite chambre de tourbillons (110, 410) par ledit premier passage (112, 412) de façon que ledit fluide de travail s'écoule dans ladite chambre de tourbillons (110, 410) en un motif tourbillonnaire.

2. Amortisseur de choc selon la revendication 1, caractérisé en ce que ledit moyen de communication comprend ledit premier passage (112) formé dans une section supérieure horizontale dudit piston (100) pour établir une communication entre ladite première chambre (48) et ladite chambre de tourbillons (11), ledit premier passage de fluide (112) étant placé adjacent à la circonférence de ladite chambre de tourbillons (110) et ledit second passage de fluide (126) formé dans une section inférieure horizontale dudit piston (100) pour établir la communication entre ladite seconde chambre (50) et ladite chambre de tourbillons (110), ledit second passage (126) étant placé sensiblement au centre de ladite chambre de tourbillons (110).

3. Amortisseur de choc selon la revendication 1, caractérisé en ce que ledit moyen de communication (412, 426, 418) comprend ledit premier passage (412) formé dans une section horizontale supérieure dudit piston (400) pour établir la communication entre ladite première chambre (348) et ladite chambre de tourbillons (410), ledit premier passage de fluide (412) étant placé en une position intermédiaire entre le centre de la circonférence de ladite chambre de tourbillons (410) et ledit second passage de fluide (426) formé dans une section inférieure horizontale dudit piston (400) pour établir la communication entre ladite seconde chambre (350) et ladite chambre de tourbillons (410), ledit second passage (426) étant placé sensiblement au centre de ladite chambre de tourbillons (410).

4. Amortisseur de choc selon la revendication 2, caractérisé en ce que lesdits moyens de guidage sont des organes en forme de lames (114) disposées adjacents aux bords latéraux internes du premier passage respectif (112).

5. Amortisseur de choc selon la revendication 3, caractérisé en ce que lesdits moyens de guidage comprennent un organe (450) ayant une gorge hélicoïdale (454) pour guider le fluide dans ladite chambre de tourbillons pour qu'il s'écoule de manière tourbillonnaire, ledit organe de guidage (450) comprenant une section de gorge annulaire (452) placée pour faire face audit premier passage de fluide (412) et communiquant avec lesdites gorges hélicoïdales (454).

6. Amortisseur de choc selon l'une quelconque des revendications précédentes, l'amortisseur de choc étant du type à action directe et comprenant en plus dudit cylindre interne creux (32, 332) définissant ladite chambre de fluide (42, 342), un cylindre externe creux (30, 330) agencé coaxialement avec ledit cylindre interne (32, 332), d'un diamètre plus grand que celui dudit cylindre interne, pour ainsi définir une chambre formant réservoir de fluide (38, 338) entre ledit cylindre interne et ledit cylindre externe, et un raccord (200, 500) attaché à l'extrémité inférieure dudit cylindre interne, le raccord ayant une seconde chambre de tourbillons (210, 510), caractérisé en ce que ladite second chambre de tourbillons (210, 510) communique avec ladite seconde chambre (50, 350) par des passages droits (212, 512) et en ce qu'au moins un organe de guidage (214, 550) est disposé dans ladite seconde chambre de tourbillons (210, 510) pour guider le fluide introduit par lesdits passages (212, 512) pour produire un tourbillon dans ladite seconde chambre de tourbillons (210, 510).

**Patentansprüche**

1. Wirbelstrom-Stoßdämpfer mit einem hohlen Zylinder (32, 332), der eine mit einem Arbeitsfluid gefüllte Fluidkammer (42, 342) bildet, einem hin- und hergehend beweglichen Kolben (100, 400) in der Fluidkammer (42, 342), der diese in eine erste obere Kammer (48, 348) und eine zweite untere Kammer (50, 350) unterteilt, welcher Kolben mit einer Wirbelkammer (110, 410) versehen ist, durch die das Arbeitsfluid in einem Wirbelstrom fließt, und mit Einrichtungen zur Herstellung einer Verbindung zwischen der Wirbelkammer (110) und der ersten und zweiten Kammer (48, 348; 50, 350), die Einrichtungen zur Bildung erster und zweiter Fluidkanäle (112, 412; 126, 426) zur Herstellung einer Fluidverbindung zwischen der ersten Kammer (48, 348) und der Wirbelkammer (110, 410) und zwischen der Wirbelkammer und der zweiten Kammer (150, 350) umfassen, dadurch gekennzeichnet, daß der erste Kanal (112, 412) im wesentlichen parallel zu der Achse des Kolbens (100, 400) verläuft, und daß der Kolben weiterhin Einrichtungen (114, 450) innerhalb der Wirbelkammer (110, 410) gegenüber dem inneren Ende des ersten Kanals (112, 412) umgaßt, die das durch den ersten Kanal (112, 412) in die Wirbelkammer (110, 410) eintretende Arbeitsfluid derart führen, daß es in der Wirbelkammer (110, 410) in Wirbelform strömt.

2. Stoßdämpfer nach Anspruch 1, dadurch gekennzeichnet, daß die Verbindungseinrichtungen den ersten Kanal (112) in einem oberen waagerechten Bereich des Kolbens (100) zur Herstellung einer Verbindung zwischen der ersten Kammer (48) und der Wirbelkammer (110), welcher erste Fluidkanal (112) angrenzend an den Umfang der Wirbelkammer (110) angeordnet ist, und den zweiten Fluidkanal (126) in einem unteren waagerechten Bereich des Kolbens (100) zur Herstellung einer Verbindung zwischen der zweiten Kammer (50) und der Wirbelkammer (110) umfassen, welcher zweite Kanal (126) im wesentlichen in der Mitte der Wirbelkammer (110) angeordnet ist.

3. Stoßdämpfer nach Anspruch 1, dadurch gekennzeichnet, daß die Verbindungseinrichtungen (412, 426, 418) den ersten Kanal (412) in einem oberen waagerechten Abschnitt des Kolbens (400) zur Herstellung einer Verbindung zwischen der ersten Kammer (348) und der Wirbelkammer (410), welcher erste Fluidkanal (412) in einer mittleren Position zwischen der Mitte und dem Umfang der Wirbelkammer (410) angeordnet ist, und den zweiten Fluidkanal (426) in einem unteren waagerechten Abschnitt des Kolbens (400) zur Herstellung einer Verbindung zwischen der zweiten Kammer (350) und der Wirbelkammer (410) umfassen, welcher zweite Kanal (426) im wesentlichen in der Mitte der Wirbelkammer (410) angeordnet ist.

4. Stoßdämpfer nach Anspruch 2, dadurch gekennzeichnet, daß die Führungseinrichtungen blattförmige Teile (114) umfassen, die angrenzend an die inneren Ränder des ersten Kanals (112) angeordnet sind.

5. Stoßdämpfer nach Anspruch 3, dadurch gekennzeichnet, daß die Führungseinrichtungen ein Teil (450) mit einer spiralförmigen Nut (154) zur Führung des Fluids in der Wirbelkammer in einem Wirbelstrom umfassen, welches Teil (450) ein ringförmige Ausnehmung (452) gegenüber dem ersten Fluidkanal (412) zur Verbindung mit den spiralförmigen Nuten (454) umfaßt.

6. Stoßdämpfer nach einem der vorhergehenden Ansprüche in der Form eines direktwirkenden Stoßdämpfers, der zusätzlich zu dem inneren hohlen Zylinder (32, 332), der die Fluidkammer (42, 342) bildet, einen äußeren hohlen Zylinder (30, 330) koaxial zu dem inneren Zylinder (32, 332) umfaßt, welcher äußere Zylinder einen größeren Durchmesser als der innere Zylinder aufweist und mit diesem eine Fluidbehälterkammer (38, 338) bildet, mit einem Abschlußstück (200, 500), das am unteren Ende des inneren Zylinders befestigt ist und eine zweite Wirbelkammer (210, 510) aufweist, dadurch gekennzeichnet, daß die zweite Wirbelkammer (210, 510) mit der zweiten Kammer (50, 350) durch gerade Kanäle (212, 512) verbunden ist und daß wenigstens ein Führungsteil (214, 550) innerhalb der zweiten Wirbelkammer (210, 510) angeordnet ist, das das durch die Kanäle (212, 512) geführte Fluid derart führt, daß in der zweiten Wirbelkammer (210, 510) ein Wirbel erzeugt wird.

# FIG.1

# F I G.2

# F I G.3

# FIG.4

# FIG.5

# FIG.6

# F I G.7

# F I G.8

# FIG.9

# FIG.10

# FIG.11

# F I G.12

220

204

13

226

13

220

220

206

220

# F I G.13

206

220

220

204

226

# F I G.14

**FIG.15**

**FIG.16**

0 049 844

# FIG.17

# FIG.18

9

# FIG.19

# FIG.20